# EUROPÄISCHE PATENTSCHRIFT

(11) **EP 0 759 455 B1**
(45) Veröffentlichungstag und Bekanntmachung des Hinweises auf die Patenterteilung: **22.03.2000**
(21) Anmeldenummer: 96112623.2
(22) Anmeldetag: 05.08.1996
(51) Int. Cl.: C08J 3/12, C08F 295/00

(54) **Polymerteilchen und Verfahren zu deren Herstellung**
Polymer particles and process for their production
Particules polymères et leur procédé de production

(30) Priorität: 04.08.1995 DE 19528717
(43) Veröffentlichungstag der Anmeldung: 26.02.1997
(73) Patentinhaber: BASF AKTIENGESELLSCHAFT, 67056 Ludwigshafen (DE)
(72) Erfinder: McKee, Graham Edmund, Dr., 67433 Neustadt (DE); Gunesin, Binnur, Dr., 2000 Neuchatel (CH); Ticktin, Anton, Dr., 68199 Mannheim (DE)
(74) Vertreter: Isenbruck, Günter, Dr.

(56) Entgegenhaltungen:
- EP-A- 0 323 133
- EP-A- 0 603 668
- US-A- 4 985 505

## Beschreibung

Die Erfindung bezieht sich auf Polymerteilchen und ein Verfahren zu deren Herstellung. Insbesondere sind Gegenstand der Erfindung Polymerteilchen zur Mattierung und Erhöhung der Schlagzähigkeit von Polymeren.

Um Polymere wie Thermoplaste und Duroplaste zu mattieren oder ihre Schlagzähigkeit zu erhöhen, ist es bekannt, andere Polymere in die Matrix des Hauptpolymers einzubauen. Diese beigemengten Polymere können auch andere physikalische Eigenschaften der Polymeren verändern.

US-Patent 4,871,814 beschreibt die Herstellung von linearen hochmolekularen Blockcopolymeren aus Styrol und Butadien, die mindestens 5 Blöcke aufweisen. Ziel ist die Erreichung hoher optischer Transparenz und anderer erstrebenswerter physikalischer Eigenschaften. Vorgeschlagen wird die Durchführung einer anionischen Polymerisation, wobei das Dispergiermittel kein Lösungsmittel für das herzustellende Polymer sein soll.

Ein Verfahren zur Herstellung von Polymerteilchen mit schmaler Verteilung der Partikelgrößen schlägt das US-Patent 4,942,209 vor. Dabei wird ebenfalls ein anionischer Polymerisationsprozeß beschrieben, wobei das Dispergiermittel wiederum kein Lösungsmittel für das herzustellende Polymer sein soll.

In dem US-Patent 4,985,505 wird die Herstellung konjugierter Dien-Polymere, insbesondere von Blockcopolymeren aus polymerisierten Styrol- oder Alkyl-Styrol-Einheiten, und konjugierten Dienen wie Butadien, durch eine Polymerisation unter Druck beschrieben. Als Dispergiermittel wird dabei Propan oder Butan vorgeschlagen, in denen sich das herzustellende Polymer kaum löst.

Die genannten Polymere zeigen bei der Zugabe zu Thermoplasten oder Duroplasten häufig Unverträglichkeit mit der Matrix des Hauptpolymers. Dadurch können die angestrebte Zähigkeit und Mattheit des Kunststoffes nicht erreicht werden.

Aufgabe der Erfindung ist deshalb die Bereitstellung von Polymerteilchen, die als Zugaben zu Polymeren die Mattheit bzw. Schlagzähigkeit von Polymeren erhöhen, sowie eines Verfahrens zu deren Herstellung.

Die Aufgabe wird durch das in den Ansprüchen beschriebene Verfahren zur Herstellung von Polymerteilchen gelöst. Dabei wird
a) mindestens ein Monomer (a) in Gegenwart von Blockcopolymeren und/oder Pfropfcopolymeren in einem organischen, das herzustellende Polymer nicht lösenden Dispergiermittel polymerisiert, und
b) in Gegenwart des daraus erhaltenen Polymers mindestens ein Monomer (b) radikalisch polymerisiert, wobei die Polymerisation in Stufe b) ein- oder mehrmals durchgeführt wird.

Bevorzugte Ausführungsformen dieses Verfahrens sind in den Unteransprüchen definiert.

### Polymerisationsstufe a):

Als Dispergiermittel eignen sich alle organischen flüssigen Verbindungen, die das in Schritt a) hergestellte Polymer nicht lösen. Vorzugsweise werden Kohlenwasserstoffe, insbesondere C₃- bis C₁₀-Alkane, vorzugsweise C₃- bis C₈-Alkane, z.B. Propan, Butan, Isobutan, Pentan, Isopentan, Hexan, Heptan, 2,2-Dimethyl-butan und Petrol-ether, verwendet. Zu Beginn der Reaktion liegt ein Teil des Block- und/oder Pfropfcopolymers gelöst vor oder kann in situ in den ersten 20% der Reaktion gebildet werden.

Erfindungsgemäß in Schritt a) geeignete Pfropf- oder Blockcopolymere sind alle Polymere, die einen in dem Dispergiermittel löslichen und einen darin unlöslichen Teil besitzen und somit als Polymeremulgatoren wirken. Unter Wirkung dieser Emulgatoren werden Polymerteilchen gebildet. Insbesondere handelt es sich bei dem löslichen Teil um Polybutadien oder Polyisopren, die voll oder teilweise hydriert werden können, während bei dem unlöslichen Teil Polystyrol oder substituierte Polystyrole wie Poly-α-Methylstyrol vorliegen. Besonderes geeignete Pfropfcopolymere sind Kammpolymere aus Styrol und Butadien. Als Blockcopolymere werden vorzugsweise Styrol-Butadien- oder Styrol-Isopren-Zwei- oder Mehr-Blockcopolymere verwendet, die teilweise oder vollständig hydriert sind.

Erfindungsgemäß geeignete Monomere (a) sind vorzugsweise substituierte oder unsubstituierte Styrole, insbesondere Styrol, α-Methylstyrol, Isobuten, substituierte oder unsubstituierte konjugierte Alkadiene, vorzugsweise C₄- bis C₁₀-Alkadiene, insbesondere Butadien oder Isopren, vernetzend wirkende (multifunktionelle) Monomere, insbesondere Divinylverbindungen wie Divinylbenzol, oder Mischungen davon. Der bevorzugte Gewichtsanteil an Pfropf- und/oder Blockcopolymeren beträgt 0,1 bis 50 Gew.-%, insbesondere 0,1 bis 20 Gew.-%, am meisten bevorzugt 0,1 bis 7 Gew.-%, jeweils bezogen auf 100 Gew.-% Monomer (a).

Vorzugsweise wird die Polymerisation in Schritt a) anionisch, kationisch oder in Anwesenheit von Metallocen-Katalysatoren durchgeführt. Geeignete Verfahren zur Durchführung solcher Polymerisationsreaktionen sind dem Fachmann bekannt. Geeignete Polymerisationsinitiatoren sind bei anionischer Polymerisation n-Butyllithium, sec-Butyllithium und tert-Butyllithium, und bei kationischer Polymerisation Bortrifluorid (BF₃) mit Spuren von Wasser und Aluminiumtrichlorid, und Alkylchloride. Geeignete Metallocen-Katalysatoren sind Cyclopentadienkomplexe mit Metallen der III. und IV. Nebengruppe und Lanthanoide, die mit Methylalumoxan aktiviert sind, insbesondere Komplexe mit den Metallen Titan oder Zirkonium. Daneben können auch Ziegler-Natta- oder Group-Transfer-Katalysatoren, z.B. Titaniumtrichlorid mit Aluminiumalkylen, verwendet werden. Erfindungsgemäß besonders bevorzugt sind Butyllithium-Verbindungen.

Der erste Polymerisationsschritt (Schritt a)) kann durch Zugabe von Abbruchreagenzien wie CO₂, H₂O, Alkohol wie Methanol, Ethanol, Isopropanol und Butanol, SO₂, SO₃ oder Sulfiden, z.B. Ethylensulfid, abgebrochen werden. Bei einer chemischen Verknüpfung der Polymeren aus dem Schritt a) und dem Schritt b) ist es vorteilhaft, die erste Polymerisation (Schritt a)) durch Zugabe von Ethylensulfid abzubrechen oder am Ende der Stufe a) Divinylbenzol zuzugeben. Nach Durchführung von Schritt a) erhält man ein Polymer, das aus Polymer aus a) besteht, das mit den Blockcopolymeren und/oder Pfropfcopolymeren bedeckt ist.

### Polymerisationsstufe b):

In der Polymerisationsstufe b) wird erfindungsgemäß mindestens ein Monomer (b) in Gegenwart von aus der Polymerisationsstufe a) erhaltenem Polymer radikalisch polymerisiert. Dabei werden um die Polymerteilchen aus Schritt a) Hüllen oder "Interpenetrating Netzwerke" gebildet.

Erfindungsgemäß als Monomer (b) geeignete Monomere sind alle Monomere, die radikalisch polymerisierbar sind. Bevorzugt verwendet werden die bei den Monomeren (a) genannten Monomeren, soweit sie radikalisch polymerisierbar sind. Daneben eignen sich auch Acrylnitril, Acrylsäure und ihre Derivate wie Acrylate mit 1 bis 30 C-Atomen in der Alkylgruppe des Esters - wie z.B. Methylacrylat, Ethylacrylat, Butylacrylat -, Acrylamid und Glycidylacrylat sowie dieselben Verbindungen mit Methacrylsäure; Ethylen, Maleinimid, Maleinsäureanhydrid und Vinylchlorid. In einer bevorzugten Ausführungsform der Erfindung werden Styrol, Butadien, Isopren, Acrylnitril, Acrylsäure und Methacrylsäure und deren Ester, Amide, Anhydride, Ethylen, Maleinimid und/oder Vinylchlorid verwendet. Weitere geeignete Monomere sind z.B. in "Polymer Handbook", Brandrup und Immergut, 3. Auflage, Hrsg. John Wiley and Sons, Seiten II/154 - II/251, beschrieben. Am meisten bevorzugt sind Styrol und Acrylnitril.

Bei sequentieller Zugabe verschiedener Monomere in Schritt b) kann eine Hülle aus mehreren Schichten erzeugt werden, indem nach jeder Zugabe eines Monomeren gemäß Stufe b) eine Polymerisation durchgeführt wird. Vorzugsweise wird Stufe b) nur einmal durchgeführt.

Erfindungsgemäß geeignete Radikalbildner zur Durchführung der radikalischen Polymerisation von Schritt b) sind alle Verbindungen, die thermisch oder photochemisch Radikale bilden. Besonders geeignet sind Peroxidverbindungen, wie Benzylperoxid, t-Butylperpivalat und Dicumylperoxid, und Azo-Verbindungen, wie Azo-bis-isobutyronitril. Am meisten bevorzugt sind Peroxidverbindungen.

Verfahren zur Durchführung der radikalischen Polymerisation in Schritt b) sind dem Fachmann bekannt. Die Polymerisationsstufe b) kann in dem gleichen Lösungsmittel (Dispergiermittel) durchgeführt werden, wie die Polymerisationsstufe a), so daß es nicht erforderlich ist, nach Beendigung von Schritt a) das Lösungsmittel abzutrennen. Vielmehr kann gleich mit der erhaltenen Suspension weitergearbeitet werden. Neben den Lösungsmitteln von Schritt a) eignen sich weiterhin auch alle anderen Lösungsmittel oder Lösungsmittelgemische, in denen die Polymere aus Stufe b) sich nicht lösen. Die Wahl dieser Lösungsmittel hängt von dem Polymertyp von Stufe b) ab.

Die Aufgabe der Erfindung wird auch durch die in den Ansprüchen beschriebenen Polymerteilchen gelöst. Diese sind gekennzeichnet durch einen Kern, der durch Polymerisation mindestens eines Monomers (a) in Gegenwart von Blockcopolymeren oder Pfropfcopolymeren in einem organischen, das herzustellende Polymer nicht lösenden Dispergiermittel hergestellt wird und mindestens einer den Kern mindestens teilweise umgebenden Hülle, die durch radikalische Polymerisation mindestens eines Monomers (b) in Gegenwart des Kerns hergestellt wird. Die bevorzugten Polymerteilchen sind das Produkt des erfindungsgemäßen Verfahrens.

Die mittlere Teilchengröße (der mittlere Durchmesser) beträgt typischerweise 0,1 bis 100 µm (mit dem Mikroskop bestimmt) und hängt stark von der verwendeten Block- oder Pfropfcopolymermenge ab. Je höher diese ist, desto höher ist die Polymeremulgatormenge und desto kleiner sind in der Regel die Teilchen. Die Block- bzw. Pfropfcopolymermenge wird individuell auf den Verwendungszweck eingestellt.

Erfindungsgemäß können die oben beschriebenen Polymerteilchen als Mattierungsmittel, vorzugsweise in Thermoplasten oder Duroplasten, verwendet werden. Dabei beträgt der mittlere Durchmesser der Polymerteilchen vorzugsweise mehr als 5 µm.

Polymerteilchen, wie sie oben beschrieben wurden, können auch als Schlagzähmodifizierungsmittel verwendet werden, insbesondere wenn ihr mittlerer Durchmesser weniger als 5 µm beträgt.

Die vorliegende Erfindung wird anhand der folgenden Beispiele, die weitere bevorzugte spezielle Merkmale der Erfindung beschreiben, näher erläutert.

### BEISPIELE

In sämtlichen Beispielen wurden die Polymerteilchen zur Bestimmung des mittleren Teilchendurchmessers mikroskopisch vermessen.

### Beispiel 1

### Polymerisationsstufe a):

Eine Lösung aus 819 g Styrol, 0,819 g Divinylbenzol und 114,7 g eines Styrol-Butadien-Diblockcopolymers mit einem Molekulargewicht von etwa 140000 und einem Styrol-Butadien-Verhältnis von 40 : 60 wurde mit 1521 g trockenem Hexan unter Stickstoffatmosphäre unter intensivem Rühren in ein Reaktionsgefäß mit einem Volumen von 4 l eingefüllt.

Dann wurde sekundäres Butyllithium zugegeben, bis das Reaktionsmedium eine gelbe Farbe anzunehmen begann. Danach wurden noch weitere 2,925 ml sekundäres Butyllithium beigegeben.

Es fand eine exotherme Reaktion statt, wobei die Temperatur auf 64°C stieg.

Bei dieser Temperatur wurde das Gemisch unter Stickstoffatmosphäre eine Stunde lang gerührt. Schließlich wurde die Reaktion mit 2 ml getrocknetem Ethanol abgebrochen, wobei man eine Suspension erhielt.

### Polymerisationsstufe b):

1184 g der in der Polymerisationsstufe a) entstandenen Suspension, 366 g Hexan, 338 g Styrol, 113 g Acrylnitril und 0,49 g Benzoylperoxid wurden unter Stickstoffatmosphäre unter Rühren in einen Stahlkessel eingefüllt.

Der Kessel wurde auf 86 °C aufgeheizt. Nach einer Polymerisationszeit von 6 Stunden wurde das Gemisch gekühlt. Die entstandenen Polymerteilchen wurden mit 4 l Methanol ausgefällt, mit Methanol gewaschen und bei 60 °C getrocknet.

Die entstandenen Polymerteilchen hatten mittlere Durchmesser von 0,5 bis 2 µm.

### Beispiel 2

Beispiel 1 wurde wiederholt, mit der Maßgabe, daß statt 0,819 g Divinylbenzol 4,095 g Divinylbenzol verwendet wurden.

Das Ergebnis waren Teilchen mit einem mittleren Durchmesser von rund 10 µm.

### Beispiel 3

Beispiel 1 wurde wiederum mit der Maßgabe durchgeführt, daß statt 114,7 g des Styrol-Butadien-Blockcopolymers 20 g eines hydrierten StyrolButadien-Diblockcopolymers mit einem Molekulargewicht von etwa 160000 und einem Styrol-Butadien-Verhältnis von 40 : 60 verwendet wurden. Außerdem wurden in der zweiten Verfahrensstufe 546 g statt 366 g Hexan verwendet, so daß ein Endfeststoffgehalt von etwa 40 Gew.-%, bezogen auf das Endprodukt, erhalten wurde.

Das Ergebnis waren Polymerteilchen mit einem mittleren Durchmesser von 40 µm.

### Beispiel 4

Beispiel 3 wurde dahingehend modifiziert, daß statt 20 g eines hydrierten Styrol-Butadien-Diblockcopolymers 112 g eines Styrol-Butadien-Blockcopolymers mit einem Molekulargewicht von etwa 150000 und einem Styrol-Butadien-Verhältnis von 9 : 91 verwendet wurde. Außerdem wurden in der zweiten Verfahrensstufe 939 g Hexan zugegeben, so daß ein Endfeststoffgehalt von 35 Gew.-%, bezogen auf das Endprodukt, erreicht wurde.

Das Ergebnis waren Polymerteilchen mit einem mittleren Durchmesser von 5 µm.

Photographische Aufnahmen sämtlicher in den Beispielen 1 bis 4 erhaltenen Polymerteilchen zeigten viele Einschlüsse, was bedeutet, daß die Pfropfhülle aus Styrol und Acrylnitril teilweise in die Polystyrolphase einpolymerisiert hatte.

## Patentansprüche

1. Verfahren zur Herstellung von Polymerteilchen,
dadurch gekennzeichnet, daß
a) mindestens ein Monomer (a) in Gegenwart von Blockcopolymeren und/oder Pfropfcopolymeren in einem organischen, das herzustellende Polymer nicht lösenden Dispergiermittel polymerisiert wird, und
b) in Gegenwart des daraus erhaltenen Polymers mindestens ein Monomer (b) radikalisch polymerisiert wird, wobei die Polymerisation in Stufe b) ein- oder mehrmals durchgeführt wird.

2. Verfahren nach Anspruch 1, dadurch gekennzeichnet, daß als Dispergiermittel Kohlenwasserstoffe, insbesondere C₃- bis C₁₀-Alkane, verwendet werden, und/oder daß als Blockcopolymere Styrol-Butadien- oder Styrol-Isopren-Blockcopolymere verwendet werden, die teilweise oder vollständig hydriert sind, und/oder daß als Pfropfcopolymere Styrol-Butadien- oder Styrol-Isopren-Blockpfropfpolymere verwendet werden, die teilweise oder vollständig hydriert sind.

3. Verfahren nach Anspruch 1 oder 2, dadurch gekennzeichnet, daß als Monomer (a) Styrol, Isobuten, konjugierte C₄-bis C₁₀-Alkadiene, insbesondere Butadien oder Isopren, oder vernetzend wirkende Monomere, insbesondere Divinylverbindungen, oder eine Mischung aus mindestens zwei dieser Monomere verwendet wird.

4. Verfahren nach einem der Ansprüche 1 bis 3, dadurch gekennzeichnet, daß der Gewichtsanteil an Block- und/oder Pfropfcopolymer 0,1 bis 50 Gew.-%, bevorzugt 0,1 bis 20 Gew.-%, besonders bevorzugt 0,1 bis 7 Gew.-%, jeweils bezogen auf 100 Gew.-% Monomer (a), beträgt.

5. Verfahren nach einem der Ansprüche 1 bis 4, dadurch gekennzeichnet, daß die Polymerisation in Schritt a) anionisch, kationisch oder in Anwesenheit von Metallocen-Katalysatoren erfolgt.

6. Verfahren nach einem der Ansprüche 1 bis 5, dadurch gekennzeichnet, daß als Monomer (b) Styrol, Butadien, Isopren, Acrylnitril, Acrylsäure und ihre Derivate, Methacrylsäure und ihre Derivate, Ethylen, Maleinimid oder Vinylchlorid verwendet wird.

7. Verfahren nach einem der Ansprüche 1 bis 6, dadurch gekennzeichnet, daß zur Initiierung der radikalischen Polymerisation in Schritt b) Peroxide oder Azo-Verbindungen verwendet werden.

8. Polymerteilchen, gekennzeichnet durch einen Kern, der durch Polymerisation mindestens eines Monomers (a) in Gegenwart von Blockcopolymeren oder Pfropfcopolymeren in einem organischen, das herzustellende Polymer nicht lösenden Dispergiermittel gemäß einem der Verfahrensansprüche 1 bis 5 hergestellt wird, und mindestens einer den Kern mindestens teilweise umgebenden Hülle, die durch radikalische Polymerisation mindestens eines Monomers (b), ausgewählt aus Acrylnitril, (Meth)acrylsäure und ihren Derivaten, Ethylen, Maleinimid, Vinylchlorid und Acrylnitril/Styrol-Gemischen in Gegenwart des Kerns gemäß einem der Verfahrensansprüche 1 und 7 hergestellt wird.

9. Verwendung von Polymerteilchen nach Anspruch 8, insbesondere von Polymerteilchen mit einem mittleren Durchmesser > 5 µm, als Mattierungsmittel, vorzugsweise in Thermoplasten oder Duroplasten.

10. Verwendung von Polymerteilchen nach Anspruch 8, insbesondere von Polymerteilchen mit einem mittleren Durchmesser < 5 µm, als Schlagzähmodifizierungsmittel.

## Claims

1. A process for the preparation of polymer particles, wherein
a) at least one monomer (a) is polymerized in the presence of block copolymers or graft copolymers in an organic dispersant which does not dissolve the polymer to be prepared, and
b) at least one monomer (b) is subjected to free radical polymerization in the presence of the polymer obtained therefrom, the polymerization in stage b) being carried out once or several times.

2. A process as claimed in claim 1, wherein the dispersant used is a hydrocarbon, in particular a C₃-C₁₀-alkane, or the block copolymers used are styrene/butadiene or styrene/isoprene block copolymers which are partially or completely hydrogenated, or the graft copolymers used are styrene/butadiene or styrene/isoprene block graft copolymers which are partially or completely hydrogenated.

3. A process as claimed in claim 1 or 2, wherein styrene, isobutene, a conjugated C₄-C₁₀-alkadiene, in particular butadiene or isoprene, or a crosslinking monomer, in particular a divinyl compound, or a mixture of at least two of these monomers is used as monomer (a).

4. A process as claimed in any of claims 1 to 3, wherein the amount by weight of block or graft copolymer is from 0.1 to 50, preferably from 0.1 to 20, particularly preferably from 0.1 to 7, % by weight, based in each case on 100% by weight of monomer (a).

5. A process as claimed in any of claims 1 to 4, wherein the polymerization in step a) is carried out anionically, cationically or in the presence of metallocene catalysts.

6. A process as claimed in any of claims 1 to 5, wherein styrene, butadiene, isoprene, acrylonitrile, acrylic acid or a derivative thereof, methacrylic acid or a derivative thereof, ethylene, maleimide or vinyl chloride is used as monomer (b).

7. A process as claimed in any of claims 1 to 6, wherein a peroxide or azo compound is used for initiating the free radical polymerization in step b).

8. A polymer particle which comprises a core which is prepared by polymerization of at least one monomer (a) in the presence of block copolymers or graft copolymers in an organic dispersant which does not dissolve the polymer to be prepared, as claimed in any of process claims 1 to 5, and at least one shell which at least partly surrounds the core and is prepared by free radical polymerization of at least one monomer (b), selected from acrylonitrile, (meth)acrylic acid or a derivative thereof, ethylene, maleimide, vinyl chloride and acrylonitrile/styrene mixtures, in the presence of the core, as claimed in any of process claims 1 and 7.

9. Use of polymer particles as claimed in claim 8, in particular of polymer particles having a mean diameter of > 5 µm, as a dulling agent, preferably in thermoplastics or thermosetting plastics.

10. Use of polymer particles as claimed in claim 8, in particular of polymer particles having a mean diameter of < 5 µm, as an impact modifier.

## Revendications

1. Procédé de préparation de particules de polymère, caractérisé en ce que
a) au moins un monomère (a) est polymérisé en présence de copolymères bloc et/ou de copolymères de greffage dans un dispersant organique, qui ne dissout pas le polymère à préparer, et
b) au moins un monomère (b) est polymérisé par voie radicalaire en présence du polymère ainsi obtenu, la polymérisation dans l'étape (b) étant effectuée à une ou plusieurs reprises.

2. Procédé suivant la revendication 1, caractérisé en ce que, comme dispersants, on utilise des hydrocarbures, en particulier des alcanes en C₃-C₁₀, et/ou en ce que, comme copolymères bloc, on utilise des copolymères bloc à base de styrène-butadiène ou de styrène-isoprène qui sont partiellement ou totalement hydrogénés et/ou en ce que, comme copolymères de greffage, on utilise des polymères de greffage bloc à base de styrène-butadiène ou de styrène-isoprène qui sont partiellement ou totalement hydrogénés.

3. Procédé suivant l'une des revendications 1 et 2, caractérisé en ce que, comme monomère (a), on utilise du styrène, de l'isobutène, des alcadiènes conjugués en C₄-C₁₀, en particulier du butadiène ou de l'isoprène, ou des monomères à action de réticulation, en particulier des composés divinyliques, ou un mélange d'au moins deux de ces monomères.

4. Procédé suivant l'une des revendications 1 à 3, caractérisé en ce que la fraction pondérale de copolymère bloc et/ou de copolymère de greffage est de 0,1 à 50% en poids, de préférence de 0,1 à 20% en poids, particulièrement préférentiellement de 0,1 à 7% en poids, chaque fois par rapport à 100% en poids de monomère (a).

5. Procédé suivant l'une des revendications 1 à 4, caractérisé en ce que la polymérisation dans l'étape a) s'effectue par voie anionique, cationique ou en présence de catalyseurs à base de métallocène.

6. Procédé suivant l'une des revendications 1 à 5, caractérisé en ce que, comme monomère (b), on utilise du styrène, du butadiène, de l'isoprène, de l'acrylonitrile, de l'acide acrylique et leurs dérivés, de l'acide méthacrylique et leurs dérivés, de l'éthylène, de l'imide maléique ou du chlorure vinylique.

7. Procédé suivant l'une des revendications 1 à 6, caractérisé en ce que, pour l'initiation de la polymérisation radicalaire, on utilise dans l'étape b) des peroxydes ou des composés azoïques.

8. Particules de polymère, caractérisées par un noyau qui est préparé par polymérisation d'au moins un monomère (a) en présence de copolymères bloc ou de copolymères de greffage dans un dispersant organique qui ne dissout pas le polymère à préparer, conformément à une des revendications 1 à 5, et par au moins une enveloppe qui entoure au moins partiellement le noyau et qui est préparée par polymérisation radicalaire d'au moins un monomère (b), choisi parmi de l'acrylonitrile, de l'acide (méth)acrylique et leurs dérivés, de l'éthylène, de l'imide maléique, du chlorure de vinyle et des mélanges d'acrylonitrile/styrène, en présence du noyau, conformément à une des revendications 1 et 7.

9. Utilisation de particules de polymère suivant la revendication 8, en particulier de particules de polymère ayant un diamètre moyen > 5µm, comme agent de matité, de préférence dans des matières thermoplastiques ou thermodurcissables.

10. Utilisation de particules de polymère suivant la revendication 8, en particulier de particules de polymère ayant un diamètre moyen < 5 µm, comme produit de modification de la résilience.
